# EUROPEAN PATENT APPLICATION

(11) **EP 0 986 225 A1**
(43) Date of publication of application: **15.03.2000**
(21) Application number: 98307362.8
(22) Date of filing: 11.09.1998
(51) Int. Cl.: H04L 29/06, G06F 17/30

(54) **System and method for securely synchronizing multiple copies of a workspace element in a network**

(71) Applicant: Visto Corporation, Mountain View, CA 94043 (US)
(72) Inventor: Mendez, Daniel J., Menlo Park, California 94025 (US); Riggins, Mark D., San Jose, California 95123 (US); Wagle, Prasad, Santa Clara, California 95051 (US); Ying, Christine C., Menlo Parky, California 94025 (US)
(74) Representative: Harris, Ian Richard

(57) **Abstract**

A system includes a general synchronization module at the client site for operating within a first firewall and for examining first version information to determine whether a first workspace element has been modified. The system further includes a synchronization agent at a global server for operating outside the first firewall and for forwarding to the general synchronization module second version information which indicates whether an independently-modifiable copy of the first workspace element has been modified. A synchronization-start module is maintained at the client site for operating within the first firewall and for securely initiating the general synchronization module and the synchronization agent when predetermined criteria have been satisfied. The system further includes means for generating a preferred version from the first workspace element and from the copy by comparing the first version information and the second version information, and means for storing the preferred version at the first store and at the second store.

## Description

### BACKGROUND OF THE INVENTION

This invention relates generally to computer networks, and more particularly to a system and method for securely synchronizing multiple copies of a workspace element such as a file in a secure network.

Data consistency is a significant concern for computer users. For example, when maintaining multiple independently-modifiable copies of a document, a user risks using an outdated version. Further, by the time the user notices the inconsistency, interparty miscommunication or data loss may have resulted. The user must then spend more time attempting to reconcile the inconsistent versions.

The problem of data inconsistency is exacerbated when multiple copies of a document are maintained at different network locations. For example, due to network security systems such as conventional firewall technology, a user may have access only to a particular one of these network locations. Without access to the other sites, the user cannot confirm that the version on the accessible site is the most recent draft.

Therefore, a system and method are needed for providing users with data consistency, and more particularly for synchronizing multiple copies of a workspace element such as a document in the secure network environment.

Particular and preferred aspects of the invention are set out in the accompanying independent and dependent claims. Features of the dependent claims may be combined with those of the independent claims as appropriate and in combinations other than those explicitly set out in the claims.

### SUMMARY OF THE INVENTION

An embodiment of the invention provides a system and method for synchronizing multiple copies of a workspace element in a secure network environment. The secure network environment includes a global server connected to multiple clients. Using the present system and method, the clients automatically synchronize workspace data between multiple sites, independent of whether the sites are protected by site firewalls.

The present system includes a general synchronization module at the client site for operating within a first firewall and for examining first version information to determine whether a first workspace element has been modified. The system further includes a synchronization agent at the global server for operating outside the first firewall and for forwarding to the general synchronization module second version information which indicates whether an independently-modifiable copy of the first workspace element has been modified. A synchronization-start module at the client site operates within the first firewall and initiates the general synchronization module and the synchronization agent when predetermined criteria have been satisfied. The system further includes means for generating a preferred version from the first workspace element and from the copy by comparing the first version information and the second version information, and means for storing the preferred version at the first store and at the second store.

The system further handles the case when both the workspace element and the copy have been modified independently since the last date and time of synchronization. Accordingly, a content-based synchronization module performs a responsive action such as determined a preferred version or storing both the first workspace element and the copy at both the first store and at the second store.

The present method includes the steps of generating first examination results by examining first version information, which indicates whether a first workspace element stored at a first store within a firewall has been modified; and generating second examination results by examining second version information which indicates whether an independently-modifiable copy of the first workspace element, the copy being stored at a second store outside the firewall, has been modified. The present method further includes the steps of initiating synchronization from within the firewall when predetermined criteria have been satisfied; generating a preferred version from the first workspace element and from the copy based on the first and second examination results; and storing the preferred version at the first store and at the second store.

The system and method advantageously use a trusted third party to enable the synchronization of workspace data among multiple sites. Accordingly, a client user who maintains a work site, a home site, an off-site and the global server site can synchronize the workspace data or portions thereof among all four sites. Further, the predetermined criteria (which controls when the synchronization-start module initiates synchronization) may be set so that the general synchronization module synchronizes the workspace data upon user request, at predetermined times during the day such as while the user is commuting, or after a predetermined user action such as user log-off or user log-on. Because the system and method operate over the Internet, synchronization can occur over any distance. Since synchronization is initiated from within the firewall, the typical firewall, which prevents in-bound communications, does not act as an impediment to workspace data synchronization. Also, since the user's preferences may be previously set, the present system and method may operate unattended by the client user.

### BRIEF DESCRIPTION OF THE DRAWINGS

Exemplary embodiments of the invention are described hereinafter, by way of example only, with reference to the accompanying drawings, in which:
FIG. 1 is a block diagram illustrating a secure data-synchronizing network in accordance with the present invention;
FIG. 2 is a block diagram illustrating details of a FIG. 1 service server;
FIG. 3 is a block diagram illustrating details of the FIG. 1 desktop computer;
FIG. 4 is a block diagram illustrating details of the FIG. 3 base system;
FIG. 5 is a block diagram illustrating details of the FIG. 1 synchronization agent; and
FIG. 6 is a flowchart illustrating a method for synchronizing multiple copies of a workspace element in a secure network.

### DETAILED DESCRIPTION

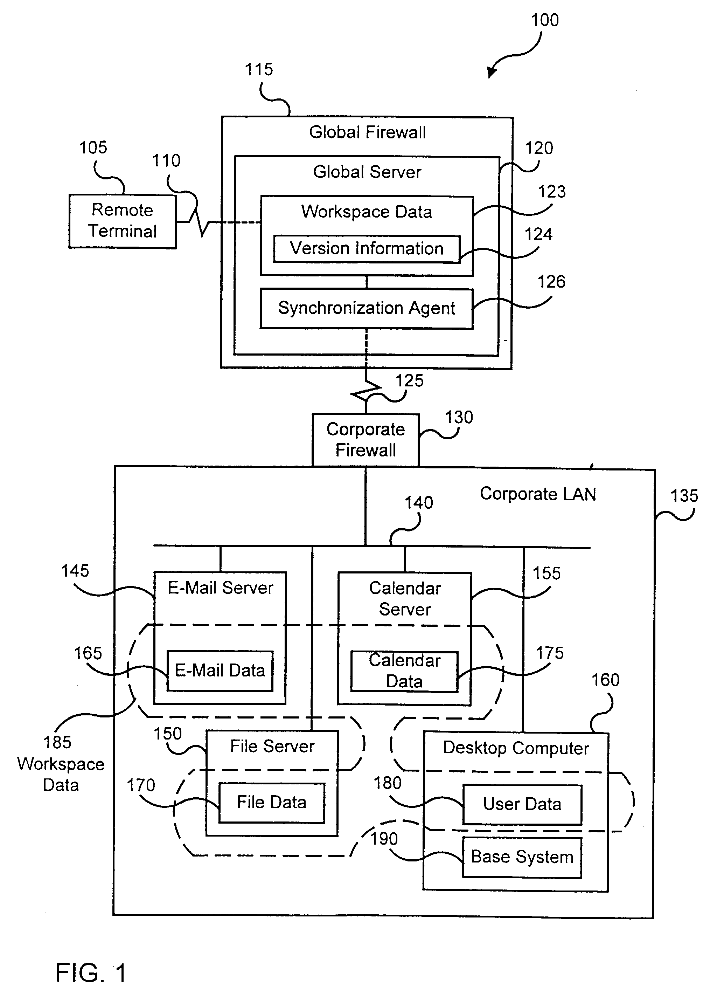

FIG. 1 is a block diagram illustrating a secure data-synchronizing network 100, comprising a first site such as a remote computer terminal 105 coupled via a communications channel 110 such as the Internet to a global server 120. The global server 120 is in turn coupled via a communications channel 125 such as the Internet to a second site such as a corporate Local Area Network (LAN) 135. The global server 120 is protected by a global firewall 115, and the corporate LAN 135 is protected by a corporate firewall 130.

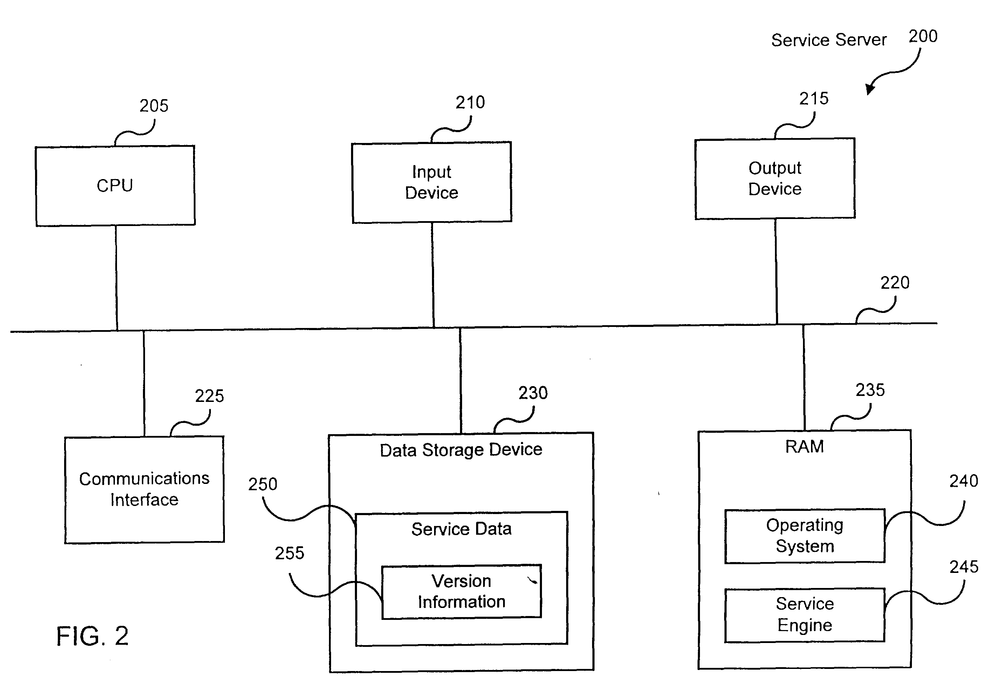

The corporate LAN 135 includes a corporate signal bus 140 coupling the corporate firewall 130 to an e-mail server 145 having e-mail data 165, to a file server 150 having file data 170, to a calendar server 155 having calendar data 175 and to a desktop computer 160 having user data 180. It will be appreciated that the e-mail data 165, file data 170, calendar data 175 and user data 180 or portions thereof may be stored at different locations such as locally on the desktop computer 160. It will be further appreciated that the e-mail data 165, file data 170, calendar data 175 and user data 180 are exemplary and collectively referred to herein as "workspace data" 185. Those skilled in the art will recognize that "workspace data" may include other types of data such as application programs. It will be further appreciated that the e-mail data 165, file data 170, calendar data 175 and user data 180 may each be divided into workspace elements, wherein each workspace element is identified by particular version information 255 (described below with reference to FIG. 2). Accordingly, each e-mail, file, calendar, etc. may be referred to as "a workspace element in workspace data."

An independently modifiable copy of the workspace data 185, referred to herein as workspace data 123, is stored on the global server 120 for easy access by a user from the remote terminal 105. Being a copy, the workspace data 123 includes independently modifiable copies of each workspace element in workspace data 185 and an independently modifiable copy of version information 255 (FIG. 2), referred to herein as version information 124.

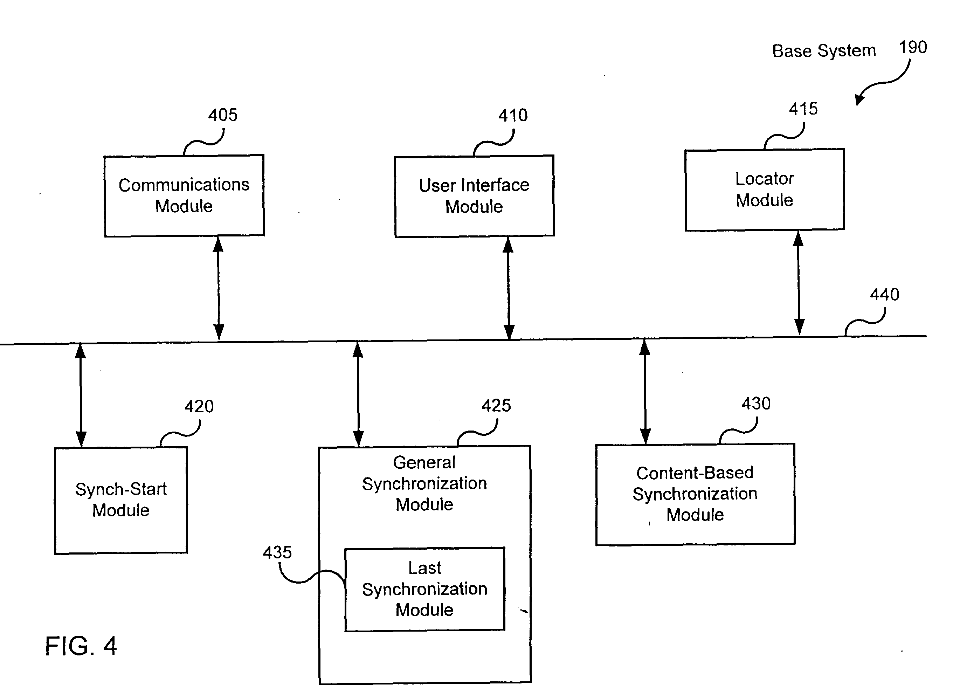

Network 100 further comprises synchronization means, which includes a base system 190 stored within the corporate LAN 135 and for example on the desktop computer 160 and further includes a synchronization agent 126 stored outside the corporate firewall 130 and preferably on the global server 120. The base system 190 and the synchronization agent 126 cooperate to synchronize the workspace data 185 with the workspace data 123. Generally, the base system 190 manages the workspace data 185 within the corporate LAN 135 and the synchronization agent 126 manages the workspace data 123 within the global server 120. As described in greater detail below with reference to FIG. 4, the base system 190 preferably initiates and controls data synchronization.

The remote terminal 105 may include a smart telephone or a Personal Data Assistant (PDA) such as the PalmPilot system by the U.S. Robotics, Inc. Although not shown, the remote terminal 105 may include a second base system similar to the base system 190, which is described with greater detail with reference to FIG. 4. Accordingly, the second base system on the remote terminal 105 would cooperate with the synchronization agent 126 to synchronize the workspace data stored on the remote terminal 105 with the workspace data 123 stored on the global server 120. As with the corporate LAN, the second base system on the remote terminal 105 would preferably initiate and control data synchronization with the global server 120 for the same reasons discussed below. Workspace data on the remote terminal 105 would thus be synchronized with the workspace data 123 and with the workspace data 185.

FIG. 2 is a block diagram illustrating details of a service server 200, wherein each of the e-mail server 145, the file server 150, the calendar server 155 and the desktop computer 160 is an instance thereof. Service server 200 includes a Central Processing Unit (CPU) 205 such as a Motorola Power PC® microprocessor or an Intel Pentium® microprocessor. An input device 210 such as a keyboard and mouse and an output device 215 such as a Cathode Ray Tube (CRT) display are coupled via a signal bus 220 to CPU 205. A communications interface 225 (such as an Ethernet port), a data storage device 230 (such as read only memory or a magnetic disk), and Random-Access Memory (RAM) 235 are further coupled via signal bus 220 to the CPU 205.

An operating system 240 includes a program for controlling processing by the CPU 205, and is typically stored in the data storage device 230 and loaded into the RAM 235 for execution. A service engine 245 includes a program for performing a particular service such as maintaining an e-mail data base, a calendar data base, a bookmarks data base or another file data base, and may be also stored in the data storage device 230 and loaded into the RAM 235 for execution. To perform a service, the service engine 245 operates on service data 250 (e.g., the e-mail data 165, the file data 170, the calendar data 175 or the user data 180), which is typically stored in the data storage device 250. The service data 250 includes version information 255 indicating the date and time of the last modification. The service engine 245 operates to update the version information 255 whenever modifications are made. It will be appreciated that the portion of memory in the data storage device 250 which contains the service data 250 is referred to as the service "store."

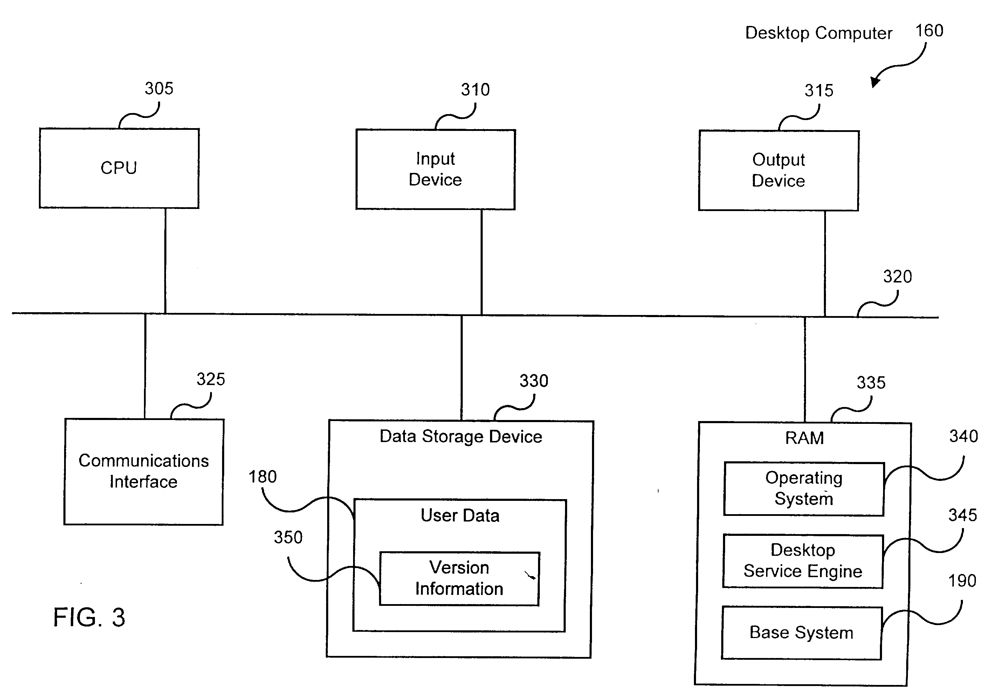

FIG. 3 is a block diagram illustrating details of the desktop computer 160, which includes a CPU 305, an input device 310, an output device 315, a communications interface 325, a data storage device 330 and RAM 335, each coupled to a signal bus 320.

An operating system 340 includes a program for controlling processing by the CPU 305, and is typically stored in the data storage device 330 and loaded into the RAM 335 for execution. A desktop service engine 345 (i.e., a particular service engine 245, FIG. 2) includes a service program for managing user data 180 (i.e., particular service data 250, FIG. 2) which includes version information 350 (i.e., particular version information 255, FIG. 2). The desktop service engine 345 may be also stored in the data storage device 330 and loaded into the RAM 335 for execution. The user data 180 may be stored in the data storage device 330. As stated above with reference to FIG. 1, the base system 190 operates to synchronize the workspace data 185 (which includes user data 180) with the workspace data 123. The base system 190 may be also stored in the data storage device 330 and loaded into the RAM 335 for execution.

FIG. 4 is a block diagram illustrating details of the base system 190, which includes a communications module 405, a user interface module 410, a locator module 415, a synchronization-start ("synch-start") module 420, a general synchronization module 425 and a content-based synchronization module 430. For simplicity, each module is illustrated as communicating with one another via a signal bus 440.

The communications module 405 includes routines for compressing data, and routines for communicating via the communications interface 325 (FIG. 3) with the synchronization agent 126 (FIG. 1). The communications module 405 may further include routines for applying Secure Socket Layer (SSL) technology and user identification and authentication techniques (i.e., digital certificates) to establish a secure communication channel through the corporate firewall 130 and through the global firewall 126. Examples of communications modules 405 may include TCP/IP stacks or the AppleTalk® protocol.

The user interface 410 includes routines for communicating with a user, and may include a conventional Graphical User Interface (GUI). The user interface 410 operates in coordination with the other desktop computer 160 components as described herein.

The locator module 415 includes routines for identifying the memory locations of the workspace elements in the workspace data 185 and the memory locations of the workspace elements in the workspace data 123. Workspace element memory location identification may be implemented using intelligent software, i.e., preset memory addresses or the system's registry, or using dialogue boxes to query a user. Accordingly, the locator module 415 determines the memory addresses of the workspace elements in the e-mail data 165, the workspace elements in the file data 170, the workspace elements in the calendar data 175 and the workspace elements in the user data 180 as well as the memory addresses of the corresponding workspace elements in the workspace data 123. It will be appreciated that the locator module 415 may perform workspace element memory location identification upon system boot-up or after each communication with the global server 120 to maintain updated memory locations of workspace elements.

The synchronization-start module 420 includes routines for determining when to initiate synchronization of workspace data 123 and workspace data 185. For example, the synchronization-start module 420 may initiate data synchronization upon user request, at a particular time of day, after a predetermined time period passes, after a predetermined number of changes, after a user action such as user log-off or upon like criteria. The synchronization-start module 420 initiates data synchronization by instructing the general synchronization module 425 to begin execution of its routines. It will be appreciated that communications with synchronization agent 126 preferably initiate from within the corporate LAN 1135, because the typical corporate firewall 130 prevents in-bound communications and allows outbound communications.

The general synchronization module 425 includes routines for requesting version information 124 from the synchronization agent 126 (FIG. 1) and routines for comparing the version information 255 against a last synchronization signature 435 such as a last synchronization date and time to determine which versions have been modified. The general synchronization module 425 further includes routines for comparing the version information 124 and the version information 255 to determine if only one or both versions of a particular workspace element have been modified and routines for performing an appropriate synchronizing responsive action. Appropriate synchronizing responsive actions may include forwarding the modified version (as the preferred version) of a workspace element in workspace data 185 or forwarding just a compilation of the changes to the other store(s). Other appropriate synchronizing responsive actions may include, if reconciliation between two modified versions is needed, then instructing the content-based synchronization module 430 to execute its routines which are described below.

It will be appreciated that the synchronization agent 126 preferably examines the version information 124 and forwards only the version information 124 determined to be modified since the last synchronization signature 435. This technique makes efficient use of processor power and avoids transferring unnecessary data across the communications channel 125. The general synchronization module 425 in the corporate LAN 135 accordingly compares the received version information 124 with the version information 255 to determine if reconciliation is needed. Upon completion of the data synchronization, the general synchronization module 425 updates the last synchronization signature 435.

The content-based synchronization module 430 includes routines for reconciling two or more modified versions in workspace data 123, 185 of the same workspace element. For example, if the original and the copy of a user workspace element have both been modified independently since the last synchronization, the content-based synchronization module 430 determines the appropriate responsive action. The content-based synchronization module 430 may request a user to select the preferred one of the modified versions or may respond based on preset preferences, i.e., by storing both versions in both stores or by integrating the changes into a single preferred version which replaces each modified version at both stores.

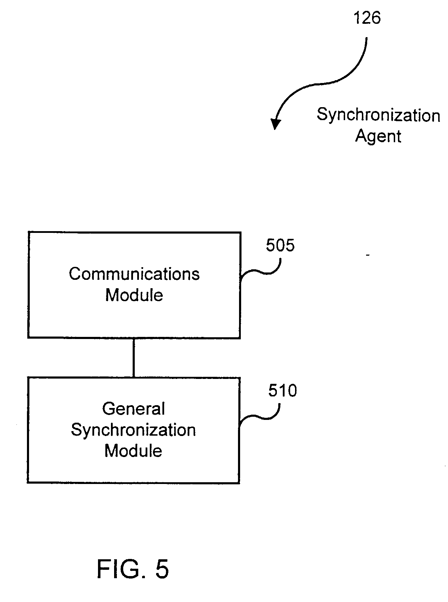

FIG. 5 is a block diagram illustrating details of the synchronization agent 126, which includes a communications module 505 (similar to the communications module 405 described above with reference to FIG. 4) and a general synchronization module 510 (similar to the general synchronization module 425 described above also with reference to FIG. 4). The communications module 505 includes routines for compressing data, and routines for communicating via the communications channel 125 with the base system 190. The communications module 505 may further include routines for establishing a secure communications channel through the global firewall 126 and through the corporate firewall 130.

The general synchronization module 510 includes routines for comparing the version information 124 with the last synchronization signature 435, and routines for forwarding to the general synchronization module 425 version information 124 determined to be modified. The general synchronization module 510 may either maintain its own last synchronization signature 435 copy (not shown). Alternatively, the request to synchronize from the base system 190 may include a copy of the last synchronization signature 435. The general synchronization module 510 further includes routines for receiving preferred versions of workspace data 185 workspace elements from the general synchronization module 425, and routines for forwarding preferred versions of workspace data 123 workspace elements to the general synchronization module 425.

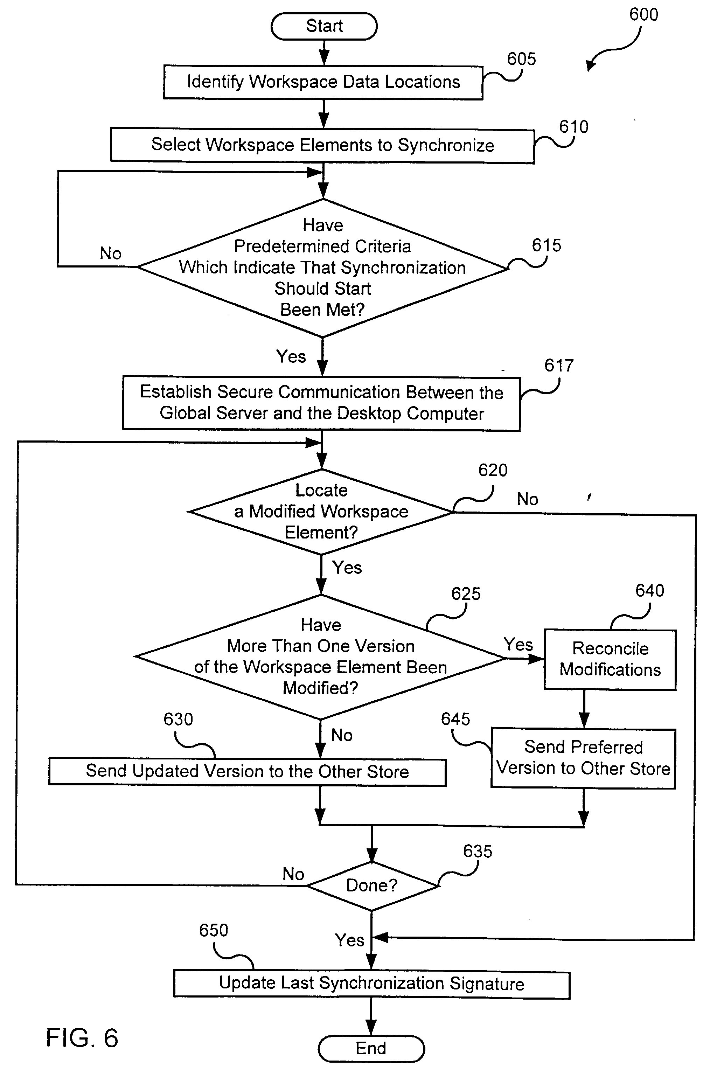

FIG. 6 is a flowchart illustrating a method 600 for synchronizing multiple copies of workspace data 123, 185 in a secure network 100. Method 600 begins with locator module 415 in step 605 identifying the memory locations of the workspace elements in workspace data 123, 185. As stated above, workspace element memory location identification may be implemented using intelligent software or dialogue boxes. The user interface module 410 in step 610 enables selection of the workspace elements in workspace data 123, 185 to be synchronized by the general synchronization module 425.

The synchronization-start module 420 in step 615 determines whether predetermined criteria have been met which indicate that synchronization of the workspace elements selected in step 610 should start. If not, then method 600 loops back to step 615. Otherwise, the communications module 405 and communications module 505 in step 617 establish a secure communications channel between the global server 120 and the desktop computer 160. The general synchronization module 510 in step 620 compares the version information 124 of each of the selected workspace elements in workspace data 123 against the last synchronization signature 435 to determine modified workspace elements, and forwards the version information 124 of workspace elements determined to be modified to the general synchronization module 425. Further, the general synchronization module 425 in step 620 compares the version information 255 of each selected workspace element in the workspace data 185 against the last synchronization signature 435 to locate modified workspace elements. In this embodiment, a workspace element has been modified if the date and time of last modification is after the date and time of last synchronization.

If no modified workspace elements in workspace data 123 or in workspace data 185 are located, then the general synchronization modules 425 and 510 in step 650 update the last synchronization signature 435 and method 600 ends. Otherwise, the general synchronization module 425 in step 625 determines whether more than one version of the same workspace element has been modified since the last synchronization.

If only one version has been modified, then the corresponding general synchronization module 425 or 510 in step 630 forwards the updated preferred version of the workspace element to the other store, and then in step 635 determines whether all workspace elements selected in step 610 have been examined. If so, then method 600 jumps to step 650. Otherwise, then method 600 returns to step 620.

If more than one version has been modified, then the general synchronization module 425 in step 640 instructs the content-based synchronization module 430 to reconcile the modified versions. Reconciliation may include requesting instructions from the user or, based on preselected preferences, performing responsive actions such as storing both versions at both stores.

General synchronization module 425, 510 in step 645 sends the preferred version of the workspace element or just a compilation of the changes to the other store. That is, if the preferred version is a workspace element in the workspace data 185, then general synchronization module 425 sends the preferred version or the changes to general synchronization module 510 to update the outdated workspace element in the workspace data 123. If the preferred version is a workspace element in the workspace data 123, then the general synchronization module 510 sends the preferred version or the changes to the general synchronization module 425 to update the outdated workspace element in the workspace data 185. Method 600 then jumps to step 635.

The foregoing description of the preferred embodiments of the invention is by way of example only, and other variations of the above-described embodiments and methods are provided by the present invention. For example, although the global server 120 is illustrated as a single device, the global server 120 may include several computers networked together. Although not described in great detail, the remote terminal 105 can synchronize copies of workspace elements stored on it with workspace elements of workspace data 123 stored on the global server 120. Components of this invention may be implemented using a programmed general purpose digital computer, using application specific integrated circuits, or using a network of interconnected conventional components and circuits. The embodiments described herein have been presented for purposes of illustration and are not intended to be exhaustive or limiting. Many variations and modifications are possible in light of the foregoing teaching.

## Claims

1. A computer-based method comprising the steps of:
(a) generating first examination results from first version information which indicates whether a first workspace element stored at a first store within a firewall has been modified;
(b) generating second examination results from second version information which indicates whether an independently-modifiable copy of the first workspace element has been modified, the copy being stored at a second store outside the firewall;
(c) initiating steps (a) and (b) from within the firewall when predetermined criteria have been satisfied;
(d) generating a preferred version from the first workspace element and from the copy based on the first and second examination results; and
(e) storing the preferred version at the first store and at the second store.

2. The method of claim 1 wherein the second store is on a global server outside the firewall and which is protected by a global firewall.

3. The method of claim 1 or claim 2 wherein the first version information includes the date and time the first workspace element was last modified and the second version information includes the date and time the copy was last modified.

4. The method of claim 3 wherein generating the first examination results includes the step of comparing the first version information against a date and time of last synchronization.

5. The method of claim 3 or claim 4 wherein generating the second examination results includes the step of comparing the second version information against a date and time of last synchronization.

6. The method of any preceding claim further comprising, before generating the first examination results, the step of updating the first version information whenever the first workspace element is modified.

7. The method of any preceding claim further comprising, before generating the second examination results, the step of updating the second version information whenever the copy is modified.

8. The method of any preceding claim wherein if only one of the first workspace element and the copy has been modified, then the step of generating includes selecting the one as the preferred version.

9. The method of any preceding claim further comprising the step of locating the first workspace element, the first version information, the copy and the second version information.

10. A system comprising:
a general synchronization module for operating within a first firewall and for examining first version information to determine whether a first workspace element has been modified;
a synchronization agent for operating outside the first firewall and for forwarding to the general synchronization module second version information which indicates whether an independently-modifiable copy of the first workspace element has been modified;
a synchronization-start module for operating within the first firewall and for initiating the general synchronization module and the synchronization agent when predetermined criteria have been satisfied;
means for generating a preferred version from the first workspace element and from the copy by comparing the first version information and the second version information; and
means for storing the preferred version at the first store and at the second store.

11. The system of claim 10 further comprising a communications module for communicating through the first firewall.

12. The system of claim 10 or claim 11 wherein the synchronization agent and the second store are on a global server which is protected by a global firewall.

13. The system of claim 12 further comprising a communications module for communicating through the first firewall and through the global firewall.

14. The system of any one of claims 10 to 13 wherein the first version information includes the date and time the first workspace element was last modified and the second version information includes the date and time the copy was last modified.

15. The system of claim 14 wherein the general synchronization module compares the first version information against a date and time of last synchronization.

16. The system of claim 14 or claim 15 wherein the synchronization agent compares the second version information against the date and time of last synchronization.

17. The system of any one of claims 10 to 16 further comprising means for updating the first version information whenever the first workspace element is modified.

18. The system of any one of claims 10 to 17 further comprising means for updating the second version information whenever the copy is modified.

19. The system of any one of claims 10 to 18 wherein if only one of the first workspace element and the copy has been modified, then the means for generating selects the one as the preferred version.

20. The system of any one of claims 10 to 19 further comprising a locator module for locating the first store, the first workspace element, the first version information, the second store, the copy and the second version information.

21. A system comprising:
first means for generating first examination results from first version information which indicates whether a first workspace element stored at a first store within a firewall has been modified;
second means for generating second examination results from second version information which indicates whether an independently-modifiable copy of the first workspace element has been modified, the copy being stored at a second store outside the firewall;
means for initiating the first and second means from within the firewall when predetermined criteria have been satisfied;
means for generating a preferred version from the first workspace element and from the copy based on the first and second examination results; and
means for storing the preferred version at the first store and at the second store.

22. A computer-readable storage medium storing program code for causing a computer to perform the steps of:
(a) generating first examination results from first version information which indicates whether a first workspace element stored at a first store within a firewall has been modified;
(b) generating second examination results from second version information which indicates whether an independently-modifiable copy of the first workspace element has been modified, the copy being stored at a second store outside the firewall;
(c) initiating steps (a) and (b) from within the firewall when predetermined criteria have been satisfied;
(d) generating a preferred version from the first workspace element and from the copy based on the first and second examination results; and
(e) storing the preferred version at the first store and at the second store.

23. A computer-based method comprising the steps of:
(a) generating first examination results from first version information which indicates whether a first workspace element stored at a first store within a firewall has been modified;
(b) generating second examination results from second version information which indicates whether an independently-modifiable copy of the first workspace element has been modified, the copy being stored at a second store outside the firewall;
(c) initiating steps (a) and (b) from within the firewall when predetermined criteria have been satisfied;
(d) determining based on the first and second examination results that both the first workspace element and the copy have been modified; and
(e) storing both the first workspace element and the copy at the first store and at the second store.

24. A system comprising:
first means for generating first examination results from first version information which indicates whether a first workspace element stored at a first store within a firewall has been modified;
second means for generating second examination results from second version information which indicates whether an independently-modifiable copy of the first workspace element has been modified, the copy being stored at a second store outside the firewall;
means for initiating the first and second means from within the firewall when predetermined criteria have been satisfied;
means for determining based on the first and second examination results that both the first workspace element and the copy have been modified; and
means for storing both the first file and the copy at the first store and at the second store.

25. A system comprising:
a global server for operating outside a firewall and including
memory for storing first workspace data and corresponding first version information; and
a synchronization agent for managing the first workspace data and the corresponding first version information and for communicating with remote clients; and
a remote client for operating within the firewall and including
memory for storing second workspace data and corresponding second version information;
means for cooperating with the synchronization agent to synchronize the first workspace data with the second workspace data by examining the first version information and the second version information; and
a synchronization-start module for initiating workspace data synchronization between the global server and the remote client.
